# EUROPEAN PATENT SPECIFICATION

(11) **EP 4 379 997 B1**
(45) Date of publication and mention of the grant of the patent: **17.12.2025**
(21) Application number: 22907636.9
(22) Date of filing: 23.09.2022
(51) Int. Cl.: H02J 7/00, H02J 9/00

(54) **CELL BALANCING CONTROL METHOD AND BATTERY SYSTEM PROVIDING SAME**
ZELLENAUSGLEICHSSTEUERUNGSVERFAHREN UND BATTERIESYSTEM DAMIT
PROCÉDÉ DE COMMANDE D'ÉQUILIBRAGE DE CELLULE ET SYSTÈME DE BATTERIE LE METTANT EN OEUVRE

(30) Priority: 14.12.2021 KR 20210178853
(43) Date of publication of application: 05.06.2024
(73) Proprietor: LG Energy Solution, Ltd., Seoul 07335 (KR)
(72) Inventor: CHOI, Jang Hyeok, Daejeon 34122 (KR)
(74) Representative: Plasseraud IP
(86) International application number: PCT/KR2022/014238
(87) International publication number: WO 2023/113165

(56) References cited:
- JP-A- 2020 150 708
- JP-B2- 5 498 286
- KR-A- 20170 117 782
- KR-A- 20210 049 470
- KR-A- 20210 049 470
- US-A1- 2007 120 529
- US-A1- 2011 050 169
- US-A1- 2015 303 728
- US-B2- 9 825 477

## Description

### [Technical Field]

The present disclosure relates to a cell balancing control method for controlling a wakeup time of a battery management system (BMS) so that the BMS in a sleep mode may wake up for each predetermined period and may perform auto-cell balancing, and a battery system for providing the method.

### [Background Art]

Obsolescence degrees of a battery may become different for respective battery cells with respect to time because of an imbalance generated in a manufacturing process or an imbalance of operation conditions. Because of the obsolescence difference, some battery cells may be completely discharged when sufficient charges are stored in other battery cells. The battery no longer supplies power so usable capacity of the battery is lowered, and this phenomenon is evaluated to be deteriorated performance of the battery.

To solve the above-noted problem, a battery management system (BMS) performs cell balancing to adjust the imbalance of a state of charge (SOC) and/or cell voltages among a plurality of battery cells. The cell balancing maximizes capacity of the battery and makes all the energy of the battery usable to thus have effects such as an increase of a lifespan of the battery.

For the purpose of safety of a system in which the battery is mounted, for example, a vehicle system, the cell balancing is performed in a sleep mode in which the vehicle system is not operated. In detail, when the vehicle system is not operated, the BMS may enter the sleep mode, and the BMS may wake up for respective predetermined periods to perform the cell balancing. The conventional battery system additionally includes parts for the wakeup purpose such as a real-time clock (RTC) integrated circuit (IC) so that the BMS in the sleep mode may wake up for respective predetermined periods.

However, when the parts for the wakeup purpose such as the RTC IC are added to the battery system, costs are generated and circuit configurations become complicated.

KR 2021 0049470 A, US2011/050169 A1, US2015/303728 A1, US2007/120529 A1 each relate to battery control systems that incorporate wakeup functionality.

### [Disclosure]

### [Technical Problem]

The present invention has been made in an effort to provide a cell balancing control method for waking up a BMS in a sleep mode for respective predetermined periods and performing cell balancing by using a timer included in a power supply unit for supplying a driving voltage to the BMS, and a battery system providing the method.

### [Technical Solution]

An aspect of the present invention provides a battery system according to claim 1.

The timer may be synchronized with a time when the BMS wakes up, and may stop counting of the first wakeup time, and the timer may be synchronized with a time when the BMS sleeps, and may count the second wakeup time.

The BMS may set performing of the cell balancing and the second wakeup time when the performing of the cell balancing is needed according to the determination result, and it may sleep when the cell balancing is completed.

The BMS may set the second wakeup time and may sleep when performing of cell balancing is not needed according to the determination result.

Another aspect of the present invention provides a method for a battery management system (BMS) according to claim 5.

The sleeping may include being synchronized with a time when the BMS sleeps, and counting the first wakeup time.

The method may include progressing to the sleeping after the setting of the second wakeup time to be a time counted by the timer, and the sleeping may include being synchronized with a time when the BMS sleeps, and counting the second wakeup time.

The waking up may include stopping counting of the first wakeup time when the BMS wakes up.

The method may further include, after the determining of whether to perform cell balancing, subtracting a time used in determining whether to perform cell balancing and a time for performing the cell balancing from the wakeup period to calculate a second wakeup time, and setting the second wakeup time to be a time counted by the timer.

The present disclosure configures the BMS in a sleep mode to wake up for respective predetermined periods by using the timer included in the power supply unit, thereby reducing costs and simplifying the battery system.

### [Advantageous Effects]

The present disclosure controls the timer so that the BMS may calculate the wakeup time and may perform counting according to the calculated wakeup time, thereby preventing the period of the cell balancing from being delayed by the timer having a counting function.

### [Description of the Drawings]

FIG. 1 shows a battery system according to an embodiment.
FIG. 2 shows a second wakeup time according to an embodiment.
FIG. 3 shows a flowchart of a method for controlling cell balancing according to an embodiment.

### [Mode for Invention]

Hereinafter, embodiments disclosed in the present specification will be described in detail with reference to the accompanying drawings. In the present specification, the same or similar components will be denoted by the same or similar reference numerals, and an overlapped description thereof will be omitted. The terms "module" and "unit" for components used in the following description are used only in order to make the specification easier.

Terms including ordinal numbers such as first, second, and the like will be used only to describe various components, and are not to be interpreted as limiting these components. The terms are only used to differentiate one component from others.

It is to be understood that when one component is referred to as being "connected" or "coupled" to another component, it may be connected or coupled directly to another component or be connected or coupled to another component with the other component intervening therebetween. On the other hand, it is to be understood that when one component is referred to as being "connected or coupled directly" to another component, it may be connected or coupled to another component without the other component intervening therebetween.

It will be further understood that terms "comprises" or "have" used in the present specification specify the presence of stated features, numerals, steps, operations, components, parts, or a combination thereof, but do not preclude the presence or addition of one or more other features, numerals, steps, operations, components, parts, or a combination thereof.

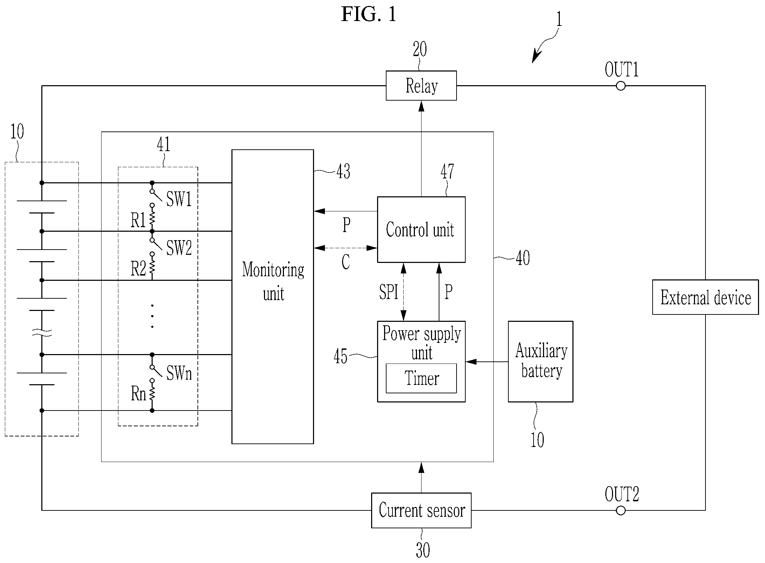

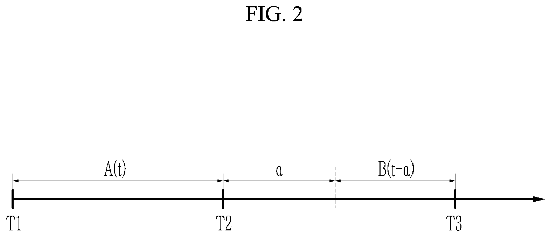

FIG. 1 shows a battery system according to an embodiment, and FIG. 2 shows a second wakeup time according to an embodiment.

Referring to FIG. 1, the battery system 1 includes a battery 10, a relay 20, a current sensor 30, and a battery management system (BMS) 40.

The battery 10 may include a plurality of battery cells connected in series/parallel, and may supply power to external devices. Referring to FIG. 1, the battery 10 includes a plurality of battery cells Cell1 to Celln connected in series, and is connected between output ends OUT1 and OUT2 of the battery system 1. A relay 20 is connected between a positive electrode of the battery system 1 and the output end OUT1, and a current sensor 30 is connected between a negative electrode of the battery system 1 and the output end OUT2. The constituent elements and connection relationships among them shown in FIG. 1 are just examples and are not limited thereto.

The relay 20 controls an electrical connection between the battery system 1 and the external device. When the relay 20 is turned on, the battery system 1 is electrically connected to the external device to perform charging or discharging. When the relay 20 is turned off, the battery system 1 is electrically disconnected from the external device. The external device may be a load or a charger.

The current sensor 30 is connected in series to a current path between the battery 10 and the external device. The current sensor 30 may measure a current flowing to the battery 10, that is, a charging current and a discharging current, and may transmit a measured result to the BMS 40.

The BMS 40 includes a cell balancing circuit 41, a monitoring unit 43, a power supply unit 45, and a control unit 47.

The cell balancing circuit 41 includes a plurality of switches SW1 to SWn and a plurality of resistors R1 to Rn. The switches SW1 to SWn switch according to corresponding switching signals from among a plurality of switching signals supplied by the monitoring unit 43. Regarding the battery cells Cell1 to Celln, the corresponding switch SWi and the resistor Ri are connected in series between the positive electrode and the negative electrode of the corresponding cell Celli. When the switch SWi is turned on, a discharging path is formed among the corresponding cell Celli, the switch SWi, and the resistor Ri, and the corresponding cell Celli discharges. Here, i is one of natural numbers of 1 to n.

The monitoring unit 43 is electrically connected to positive electrodes and negative electrodes of the respective battery cells Cell1 to Celln, and measures the cell voltage. A current value (a battery current hereinafter) measured by the current sensor 30 may be transmitted to the monitoring unit 43. The monitoring unit 43 transmits information on the measured cell voltage and battery current to the control unit 47. In detail, the monitoring unit 43 measures cell voltages of the battery cells Cell1 to Celln for respective predetermined periods, and transmits measured results to the control unit 47 for a rest period during which no charging and discharging is generated. For example, the monitoring unit 43 may include a battery monitoring integrated circuit (BMIC) or an application specific integrated circuit (ASIC).

The monitoring unit 43 may communicate with the control unit 47 according to a CAN communication (C) method, and without being limited thereto, it may communicate with the control unit 47 according to various types of communication methods. The monitoring unit 43 may discharge a cell balancing target cell from among the battery cells Cell1 to Celln through the cell balancing circuit 41 according to a cell balancing control signal transmitted from the control unit 47. For example, the monitoring unit 43 may generate a plurality of switching signals according to the cell balancing control signal of the control unit 47. The switching signals may control the switching operation of the corresponding switches SWi. When the On-level switching signal SC[i] is supplied to the corresponding switch SWi, the switch SWi is turned on and the corresponding cell Celli is discharged.

The power supply unit 45 may supply a driving voltage P or power to the control unit 47. Depending on embodiments, the power supply unit 45 may include a timer for counting wakeup times of the control unit 47. The power supply unit 45 may supply the driving voltage P to the control unit 47 when the counting result of the timer reaches the wakeup time. For example, the power supply unit 45 may include a system basis chip (SBC) for managing the power supplied to the BMS 40 in a safe way.

The power supply unit 45 may communicate with the control unit 47 according to a serial P (SPI) communication method, and without being limited thereto, it may communicate with the control unit 47 according to various types of communication methods. The power supply unit 45 may, when receiving information on a first wakeup time (A) and the sleep time of the control unit 47 from the control unit 47, set the first wakeup time to the timer. The power supply unit 45 may control the timer to be synchronized with the time when the control unit 47 sleeps and count the first wakeup time.

The timer performs the counting while the monitoring unit 43, the control unit 47, and the power supply unit 45 are in the sleep mode. The timer wakes up the power supply unit 45 when the counting result reaches the first wakeup time (A). Depending on embodiments, the timer may include not a function for measuring real-time times but a counting function.

The timer may perform counting from a time when the counting starts to a time when a predetermined time comes, and it may not include a function for confirming to what times the count starting time and the count ending time correspond. The timer may be synchronized with the time when the control unit 47 wakes up, and may stop counting the wakeup times, and the timer may be synchronized with the time when the control unit 47 sleeps, and may start counting the wakeup times.

Referring to FIG. 1, the power supply unit 45 may generate a driving voltage P by using the power supplied by an auxiliary battery 10, and may supply the driving voltage P to the control unit 47 to wake up the control unit 47. The control unit 47 transmits the driving voltage P to the monitoring unit 43 to wake up the monitoring unit 43. It has been described that the power supply unit 45, the control unit 47, and the monitoring unit 43 sequentially wake up by the timer, and without being limited thereto, when the count result reaches the first wakeup time, the power supply unit 45 wakes up, and the control unit 47 and the monitoring unit 43 may be simultaneously woken by the driving voltage P supplied by the power supply unit 45.

The power supply unit 45 is shown to be included in the BMS 40 in FIG. 1, but is not limited thereto. For example, the power supply unit 45 may be individually configured to be separated from the BMS 40 and/or the battery system 1. Referring to FIG. 1, the auxiliary battery 10 may be a battery provided by a system (e.g., a vehicle) on which the battery system 1 is mounted, but is not limited thereto. The auxiliary battery 10 may include various types of power sources for supplying a power voltage to the power supply unit 45.

The control unit 47 determines whether a predetermined sleep mode entering condition is satisfied, and when the sleep mode entering condition is satisfied, it enters the sleep mode. The control unit 47 may wake up in the sleep mode for each predetermined wakeup period and may determine whether to perform cell balancing. For example, the control unit 47 may determine whether there is a need to perform cell balancing based on the cell voltage provided by the monitoring unit 43 and the battery current, and may transmit a cell balancing control signal to the monitoring unit 43 when the cell balancing is needed according to a determination result. For example, the control unit 47 may include a microcontroller unit (MCU).

The sleep mode entering condition may include a case in which the vehicle in which the battery system 1 is mounted, parks (e.g., is not moved) for a long time, which is not limiting, and may include various conditions. In the sleep mode state, the BMS 40 may be turned off for most of the time, may wake up for each predetermined wakeup period, may be turned on for a predetermined time, and may perform cell balancing.

According to an embodiment, the control unit 47 may wake up to determine whether to perform cell balancing on a plurality of battery cells when the driving voltage P is supplied, and it may subtract a time (α) used for determining whether to perform cell balancing from a wakeup period (t) to calculate a second wakeup time (B=t-α). The control unit 47 may set the second wakeup time (B) to be a time counted by the timer.

For example, assuming that the wakeup period (t) is set to be one hour, the control unit 47 has to wake up each hour to determine whether to perform cell balancing. However, the timer is synchronized with the time when the control unit 47 wakes up to stop the counting, and it is synchronized with the time when the control unit 47 sleeps to start the count again so the time may be delayed (t+α) by the time (α) used for the control unit 47 to determine whether to perform cell balancing. That is, a time gap until the control unit 47 wakes up at the (N+1)-th period (T_{N+1}) after it wakes up at the N-th period (T_{N}) may become the time (1+α) which is further delayed from the one hour that corresponds to the period (T), which is problematic.

Referring to FIG. 2, to solve the above-noted problem, the control unit 47 may subtract the time (α) used in determining whether to perform cell balancing from the wakeup period (t) to calculate the second wakeup time (B=t-α). The control unit 47 may set the second wakeup time (B) to be a time for the timer to count. For reference, referring to FIG. 2, the first wakeup time (A) counted in synchronization with the time T1 when the sleep mode entering condition is satisfied and the control unit 47 sleeps may correspond to the wakeup period (t).

Further, the control unit 47 may subtract the time (α) used in determining whether to perform cell balancing and a cell balancing performing time (β) from the wakeup period (t) to calculate the second wakeup time (B=t-α-β). For example, when the wakeup period (t) is 60 minutes, the time (α) used in determining whether to perform cell balancing is 3 minutes, and the time (β) used from the time for performing cell balancing to the time of finishing the cell balancing is 7 minutes, the control unit 47 may calculate the second wakeup time (B) as 50 minutes and may set the time for the timer to count as 50 minutes.

A cell balancing control method and a battery system for providing the method will now be described with reference to FIG. 1 to FIG. 3.

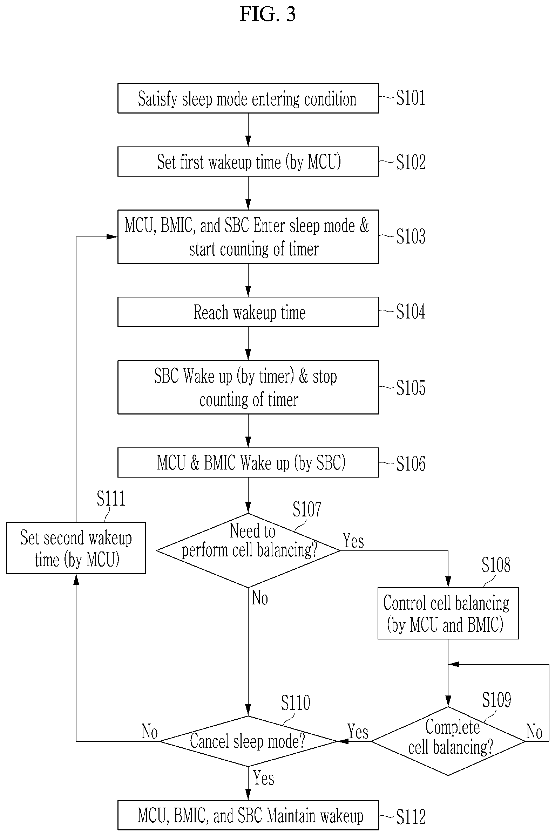

FIG. 3 shows a flowchart of a method for controlling cell balancing according to an embodiment.

Referring to FIG. 3, the BMS 40 determines whether a predetermined sleep mode entering condition is satisfied, and sets the first wakeup time (A) for the timer of the power supply unit 45 to count (S101 and S102).

Referring to FIG. 2, the first wakeup time (A) may be the time counted in synchronization with the time T1 when the sleep mode entering condition is satisfied and the BMS 40 sleeps. In this instance, the sleep mode entering condition may include various situations in which the battery 10 enters an idle state in which it is not charged and discharged for a predetermined time, and the BMS 40 also enters the sleep mode in which it is turned off for a predetermined time. For example, the sleep mode entering condition may include a situation in which the vehicle on which the battery system 1 is installed parks for a long time.

The BMS 40 controls the power supply unit 45 so that the first wakeup time (A) may be set to the timer, and it then enters the sleep mode (S103).

The power supply unit 45 may be synchronized with the time T1 when the BMS 40 sleeps, and may control the timer so that the first wakeup time (A) may be counted. The power supply unit 45 may be turned off and may be in the sleep mode until all of the first wakeup time (A) is counted. That is, while the BMS 40 is maintained in the sleep mode, the power supply unit 45 may also be in the sleep mode.

When the counting result of the timer reaches the first wakeup time (A), the BMS 40 receives the driving voltage from the power supply unit 45 and wakes up (S104, S105, and S106).

When the counting result of the timer reaches the first wakeup time (A), the power supply unit 45 wakes up by the timer (S104 and S105). The power supply unit 45 generates the driving voltage (P) with the power voltage supplied by the auxiliary battery 10, and supplies the driving voltage (P) to the BMS 40 to wake up the BMS 40 (S106). For example, referring to FIG. 2, the power supply unit 45 may be synchronized with the time T2 when the BMS 40 wakes up, and may control the timer so that the counting on the first wakeup time (A) may stop.

The BMS 40 determines whether to perform cell balancing on a plurality of battery cells (S107).

Referring to FIG. 1, the monitoring unit 43 wakes up and measures respective cell voltages of the battery cells Cell1 to Celln. The monitoring unit 43 transmits information on the measured cell voltage value and a battery current value provided by the current sensor 30 to the control unit 47. The control unit 47 may detect the battery cell needing cell balancing according to various known methods based on at least one of the received cell voltage value and the battery current value. When there is at least one battery cell needing cell balancing from among the battery cells, the control unit 47 determines that cell balancing is needed (S107, Yes). When there is no battery cell needing cell balancing, the control unit 47 determines that no cell balancing is needed (S107, No).

When the cell balancing is needed according to the determination result (S107, Yes), the BMS 40 performs cell balancing (S108).

Referring to FIG. 1, the control unit 47 may transmit a cell balancing control signal to the monitoring unit 43 so that the cell balancing may be performed on the battery cell needing cell balancing. The monitoring unit 43 may discharge the cell balancing target cell through the cell balancing circuit 41.

The BMS 40 determines whether the cell balancing is completed (S109), and when the cell balancing is completed (S109, Yes), it determines whether a sleep mode canceling condition is satisfied (S110).

The sleep mode canceling condition may include various situations in which the battery 10 enters a state in which the battery 10 must be charged or discharged and the BMS 40 must be turned on. For example, the sleep mode canceling condition may include a situation in which the vehicle on which the battery system 1 is mounted is switched to a running state from a parking state.

When the sleep mode canceling condition is not satisfied according to the determination result and the sleep mode is maintained (S110, No), the BMS 40 subtracts the time (α) used in determining whether the cell balancing is performed from the wakeup period (t) to calculate the second wakeup time (B), and sets the second wakeup time (B) to be the time for the timer to count (S111).

Referring to FIG. 2, for example, after the first wakeup time (A) when the sleep mode entering condition is satisfied, and is counted in synchronization with the time T1 when the BMS 40 sleeps, the second wakeup time (B) may be set for respective periods. That is, when there is the time (α) used in determining whether to perform cell balancing, the BMS 40 may calculate the second wakeup time (B), and may transmit information on the second wakeup time (B) to the power supply unit 45.

When the sleep mode canceling condition is satisfied according to the determination result, and the sleep mode is canceled (S110, Yes), the BMS 40 does not enter the sleep mode but maintains to be turned on (S112).

While this invention has been described in connection with what is presently considered to be practical embodiments, it is to be understood that the invention is not limited to the disclosed embodiments. However, the scope of the invention is solely defined by the appended claims.

## Claims

1. A battery system (1) comprising:
a battery (10) including a plurality of battery cells;
a battery management system, BMS, (40) configured to determine whether a predetermined sleep mode entering condition is satisfied, to enter the sleep mode when the sleep mode entering condition is satisfied, and to wake up for each predetermined wakeup period in the sleep mode state to determine whether to perform cell balancing; and **characterized in that** the battery system (1) further comprises
a power supply unit (45) including a timer synchronized with a time when the BMS (40) sleeps and configured to count a first wakeup time,
wherein the power supply unit (45) configured to supply a driving voltage to the BMS when the count result reaches the first wakeup time; wherein the BMS (40) is configured such that,
when the driving voltage is supplied to the BMS (40), the BMS (40) wakes up and determines whether to perform cell balancing on the plurality of battery cells, subtracts a time used in determining whether to perform cell balancing from the wakeup period to calculate a second wakeup time, and sets the second wakeup time to be a time counted by the timer.

2. The battery system (1) of claim 1, wherein
the timer is configured such that it is synchronized with a time when the BMS (40) wakes up and stops counting the first wakeup time, and
it is synchronized with a time when the BMS (40) sleeps and counts the second wakeup time.

3. The battery system (1) of claim 2, wherein
the BMS (40) is configured such that it sets performing of the cell balancing and the second wakeup time when the performing of the cell balancing is needed according to the determination result, and
the BMS (40) sleeps when the cell balancing is completed.

4. The battery system (1) of claim 3, wherein
the BMS (40) is configured such that it sets the second wakeup time and sleeps when performing of cell balancing is not needed according to the determination result.

5. A method for a battery management system, BMS, to wake up for each predetermined wakeup period and control cell balancing, the method comprising:
determining (S101) whether a predetermined sleep mode entering condition is satisfied;
setting a first wakeup time counted by a timer of a power supply unit of the BMS when the sleep mode entering condition is satisfied according to the determination result;
setting (S102) the first wakeup time to the timer and sleeping;
receiving a driving voltage from the power supply unit and waking up when a counting result of the timer reaches (S104) the first wakeup time; and
determining (S107) whether to perform cell balancing on a plurality of battery cells, the method further comprising:
after the determining (S107) of whether to perform the cell balancing,
subtracting a time used in determining whether to perform the cell balancing from the wakeup period to calculate a second wakeup time, and setting (S111) the second wakeup time to be a time counted by the timer.

6. The method of claim 5, wherein
the sleeping includes being synchronized with a time when the BMS sleeps, and counting the first wakeup time.

7. The method of claim 5, wherein:
the method comprises progressing to the sleeping after the setting of the second wakeup time to be a time counted by the timer, and
the sleeping includes being synchronized with a time when the BMS sleeps, and counting the second wakeup time.

8. The method of claim 5, wherein
the waking up includes stopping counting of the first wakeup time when the BMS wakes up.

9. The method of claim 5, further comprising:
after the determining (S107) of whether to perform the cell balancing, subtracting a time used in determining whether to perform the cell balancing and a time for performing the cell balancing from the wakeup period to calculate a second wakeup time, and setting the second wakeup time to be a time counted by the timer.

## Patentansprüche

1. Batteriesystem (1), umfassend:
eine Batterie (10), welche eine Mehrzahl von Batteriezellen umfasst;
ein Batteriemanagementsystem, BMS, (40), welches dazu eingerichtet ist, zu bestimmen, ob eine vorbestimmte Schlafmoduseintrittsbedingung erfüllt ist, in den Schlafmodus einzutreten, wenn die Schlafmoduseintrittsbedingung erfüllt ist, und für jeden vorbestimmten Aufwachzeitraum in dem Schlafmoduszustand aufzuwachen, um zu bestimmen, ob ein Zellausgleich durchgeführt werden soll; und
**dadurch gekennzeichnet, dass** das Batteriesystem (1) ferner eine Stromversorgungseinheit (45) umfasst, welche einen Timer umfasst, welcher mit einer Zeit synchronisiert ist, zu welcher das BMS (40) schläft, und dazu eingerichtet ist, eine erste Aufwachzeit zu zählen,
wobei die Stromversorgungseinheit (45) dazu eingerichtet ist, eine Ansteuerspannung an das BMS anzulegen, wenn das Zählergebnis die erste Aufwachzeit erreicht;
wobei das BMS (40) derart eingerichtet ist, dass, wenn die Ansteuerspannung an das BMS (40) angelegt wird, das BMS (40) aufwacht und bestimmt, ob ein Zellausgleich an der Mehrzahl von Batteriezellen durchgeführt werden soll, eine Zeit, welche bei dem Bestimmen, ob der Zellausgleich durchgeführt werden soll, verwendet wird, von dem Aufwachzeitraum subtrahiert, um eine zweite Aufwachzeit zu berechnen, und die zweite Aufwachzeit auf eine durch den Timer gezählte Zeit einstellt.

2. Batteriesystem (1) nach Anspruch 1, wobei
der Timer derart eingerichtet ist, dass er mit einer Zeit synchronisiert ist, zu welcher das BMS (40) aufwacht, und das Zählen der ersten Aufwachzeit stoppt und
er mit einer Zeit synchronisiert ist, zu welcher das BMS (40) schläft, und die zweite Aufwachzeit zählt.

3. Batteriesystem (1) nach Anspruch 2, wobei
das BMS (40) derart eingerichtet ist, dass es ein Durchführen des Zellausgleichs und die zweite Aufwachzeit einstellt, wenn das Durchführen des Zellausgleichs gemäß dem Bestimmungsergebnis erforderlich ist, und
das BMS (40) schläft, wenn der Zellausgleich abgeschlossen ist.

4. Batteriesystem (1) nach Anspruch 3, wobei
das BMS (40) derart eingerichtet ist, dass es die zweite Aufwachzeit einstellt und schläft, wenn ein Durchführen eines Zellausgleichs gemäß dem Bestimmungsergebnis nicht erforderlich ist.

5. Verfahren für ein Batteriemanagementsystem, BMS, zum Aufwachen für jeden vorbestimmten Aufwachzeitraum und Steuern eines Zellausgleichs, wobei das Verfahren umfasst:
Bestimmen (S101), ob eine vorbestimmte Schlafmoduseintrittsbedingung erfüllt ist;
Einstellen einer ersten Aufwachzeit, welche durch einen Timer einer Stromversorgungseinheit des BMS gezählt wird, wenn die Schlafmoduseintrittsbedingung gemäß dem Bestimmungsergebnis erfüllt ist;
Einstellen (S102) der ersten Aufwachzeit auf den Timer und Schlafen;
Empfangen einer Ansteuerspannung von der Stromversorgungseinheit und Aufwachen, wenn ein Zählergebnis des Timers die erste Aufwachzeit erreicht (S104); und
Bestimmen (S107), ob der Zellausgleich an einer Mehrzahl von Batteriezellen durchgeführt werden soll, wobei das Verfahren ferner umfasst:
nach dem Bestimmen (S107), ob der Zellausgleich durchgeführt werden soll,
Subtrahieren einer Zeit, welche bei dem Bestimmen, ob der Zellausgleich durchgeführt werden soll, verwendet wird, von dem Aufwachzeitraum, um eine zweite Aufwachzeit zu berechnen, und Einstellen (S111) der zweiten Aufwachzeit auf eine durch den Timer gezählte Zeit.

6. Verfahren nach Anspruch 5, wobei
das Schlafen umfasst, dass es mit einer Zeit synchronisiert wird, zu welcher das BMS schläft, und dass die erste Aufwachzeit gezählt wird.

7. Verfahren nach Anspruch 5, wobei:
das Verfahren umfasst, dass nach dem Einstellen der zweiten Weckzeit auf eine durch den Timer gezählte Zeit mit dem Schlafen fortgefahren wird, und
das Schlafen umfasst, dass es mit einer Zeit synchronisiert wird, wenn das BMS schläft, und dass die zweite Aufwachzeit gezählt wird.

8. Verfahren nach Anspruch 5, wobei
das Aufwachen umfasst, dass ein Zählen der ersten Aufwachzeit gestoppt wird, wenn das BMS aufwacht.

9. Verfahren nach Anspruch 5, ferner umfassend:
nach dem Bestimmen (S107), ob der Zellausgleich durchgeführt werden soll,
Subtrahieren einer Zeit, welche bei dem Bestimmen, ob der Zellausgleich durchgeführt werden soll, verwendet wird, und einer Zeit zum Durchführen des Zellausgleichs von dem Aufwachzeitraum, um eine zweite Aufwachzeit zu berechnen, und Einstellen der zweiten Aufwachzeit auf eine durch den Timer gezählte Zeit.

## Revendications

1. Système de batterie (1) comprenant :
une batterie (10) comportant une pluralité de cellules de batterie ;
un système de gestion de batterie, BMS, (40) configuré pour déterminer si une condition d'entrée en mode veille prédéterminée est satisfaite ou non, pour entrer en mode veille lorsque la condition d'entrée en mode veille est satisfaite et pour se réveiller pour chaque période de réveil prédéterminée dans l'état de mode veille afin de déterminer s'il faut réaliser ou non
un équilibrage de cellules ; et **caractérisé en ce que** le système de batterie (1) comprend en outre
une unité d'alimentation électrique (45) comportant une minuterie synchronisée avec un moment de veille du BMS (40) et configurée pour compter un premier temps de réveil,
dans lequel l'unité d'alimentation électrique (45) est configurée pour fournir une tension de pilotage au BMS lorsque le résultat de comptage atteint le premier temps de réveil ; dans lequel le BMS (40) est configuré de sorte que, lorsque la tension de pilotage est fournie au BMS (40), le BMS (40) se réveille et détermine s'il faut réaliser ou non un équilibrage de cellules sur la pluralité de cellules de batterie, soustrait un temps utilisé pour déterminer s'il faut réaliser ou non un équilibrage de cellules de la période de réveil pour calculer un deuxième temps de réveil, et règle le deuxième temps de réveil pour qu'il corresponde à un temps compté par la minuterie.

2. Système de batterie (1) selon la revendication 1, dans lequel
la minuterie est configurée de manière à être synchronisée avec un moment auquel le BMS (40) se réveille et cesse de compter le premier temps de réveil, et
à être synchronisée avec un moment de veille du BMS (40) et compter le deuxième temps de réveil.

3. Système de batterie (1) selon la revendication 2, dans lequel
le BMS (40) est configuré de manière à régler la réalisation de l'équilibrage de cellules et le deuxième temps de réveil lorsque la réalisation de l'équilibrage de cellules est nécessaire en fonction du résultat de détermination, et
le BMS (40) se met en veille lorsque l'équilibrage de cellules est terminé.

4. Système de batterie (1) selon la revendication 3, dans lequel
le BMS (40) est configuré de manière à régler le deuxième temps de réveil et à se mettre en veille lorsque la réalisation de l'équilibrage de cellules n'est pas nécessaire en fonction du résultat de détermination.

5. Procédé pour un système de gestion de batterie, BMS, destiné à se réveiller pour chaque période de réveil prédéterminée et à commander l'équilibrage de cellules, le procédé comprenant :
la détermination (S101) de la satisfaction ou non d'une condition d'entrée en mode veille prédéterminée ;
le réglage d'un premier temps de réveil compté par une minuterie d'une unité d'alimentation électrique du BMS lorsque la condition d'entrée en mode veille est satisfaite selon le résultat de détermination ;
le réglage (S102) du premier temps de réveil sur la minuterie et la mise en veille ;
la réception d'une tension de pilotage provenant de l'unité d'alimentation électrique et le réveil lorsqu'un résultat de comptage de la minuterie atteint (S104) le premier temps de réveil ; et
la détermination (S107) de la nécessité de réaliser ou non un équilibrage de cellules sur une pluralité de cellules de batterie, le procédé comprenant en outre :
après la détermination (S107) de la nécessité de réaliser ou non l'équilibrage de cellules,
la soustraction d'un temps utilisé pour déterminer s'il faut réaliser ou non l'équilibrage de cellules de la période de réveil pour calculer un deuxième temps de réveil, et le réglage (S111) du deuxième temps de réveil pour qu'il corresponde à un temps compté par la minuterie.

6. Procédé selon la revendication 5, dans lequel
la mise en veille comporte la synchronisation avec un moment auquel le BMS est en veille, et le comptage du premier temps de réveil.

7. Procédé selon la revendication 5, dans lequel :
le procédé comprend la progression vers la mise en veille après le réglage du deuxième temps de réveil pour qu'il corresponde à un temps compté par la minuterie, et
la mise en veille comporte la synchronisation avec un moment auquel le BMS est en veille, et le comptage du deuxième temps de réveil.

8. Procédé selon la revendication 5, dans lequel
le réveil comporte l'arrêt du comptage du premier temps de réveil lorsque le BMS se réveille.

9. Procédé selon la revendication 5, comprenant en outre :
après la détermination (S107) de la nécessité de réaliser ou non l'équilibrage de cellules, la soustraction d'un temps utilisé pour déterminer s'il faut réaliser ou non l'équilibrage de cellules et d'un temps de réalisation de l'équilibrage de cellules de la période de réveil pour calculer un deuxième temps de réveil, et le réglage du deuxième temps de réveil pour qu'il corresponde à un temps compté par la minuterie.
